# EUROPEAN PATENT APPLICATION

(11) **EP 4 738 385 A1**
(43) Date of publication of application: **06.05.2026**
(21) Application number: 24831568.1
(22) Date of filing: 03.06.2024
(51) Int. Cl.: G21F 3/00, B32B 5/28, G21F 1/10

(54) **NEUTRON SHIELDING MULTILAYER STRUCTURE**

(30) Priority: 30.06.2023 JP 2023108928
(71) Applicant: Nippon Fiber Corporation, Abiko-City Chiba 270-1162 (JP)
(72) Inventor: FUKAZAWA, Hiroshi, Abiko-City Chiba 2701162 (JP)
(74) Representative: Mewburn Ellis LLP
(86) International application number: PCT/JP2024/020181
(87) International publication number: WO 2025/004698

(57) **Abstract**

A new multilayer structure having neutron-shielding properties is provided.

The multilayer structure comprises:
two or more first layers made of a resin or elastomer, and
two or more second layers formed of inorganic fiber bundles containing neutron-absorbing elements and a resin or elastomer,
the first and second layers being laminated alternately.

Even if the total content of neutron-absorbing elements is the same, the multilayer structure of the present invention exhibits superior neutron-shielding performance compared with conventional particle-dispersion-type structures.

## Description

### Technical Field

The present invention relates to a multilayer structure excellent in neutron shielding property.

### Background Art

With the advancement of nuclear-related and aerospace technologies, the necessity for neutron-shielding materials has been increasing more than ever before.

Neutron-shielding materials are continuously required to improve their performance to protect humans from neutron exposure. Furthermore, as to electronic devices indispensable for the control of nuclear facilities and space-related equipment, the increased integration density of semiconductors mounted therein has resulted in an increasing occurrence of so-called "soft errors." A "soft error" refers to a malfunction of an electronic device caused by the inversion of bit data when neutrons derived from cosmic rays penetrate semiconductor elements. Accordingly, materials capable of effectively shielding neutrons are required not only for protecting humans but also for protecting electronic devices.

Concrete has long been known as a representative example of a neutron-shielding material; however, it is unsuitable for precision-machined parts such as housings for electronic devices. As alternative materials, composites combining neutron-shielding substances with resins have been proposed.

For example, Japanese Patent Application Laid-Open No. H6-180388 (Patent Document 1) discloses a heat-resistant neutron-shielding material obtained by incorporating inorganic boron compounds and gadolinium oxide as thermal neutron-shielding substances into phenolic resin. Japanese Patent Application Laid-Open No. 2020-30088 (Patent Document 2) discloses a resin composition in which boron carbide, boric acid, gadolinium, or a mixture thereof having a specific particle-size range is incorporated into a curable resin. The inventions disclosed in Patent Documents 1 and 2 both involve adding neutron-absorbing "powdery" raw materials into resin matrices.

Meanwhile, the present inventor has developed inorganic fibers containing a high concentration of gadolinium or the like, which exhibit excellent neutron-shielding properties (WO 2022/145401 A1; Patent Document 3).

### Prior Art Documents

### Patent Documents

Patent Document 1: JP-A H6-180388
Patent Document 2: JP-A 2020-30088
Patent Document 3: WO 2022/145401 A1

### Summary of the Invention

### Problems to be Solved by the Invention

The inventions described in Patent Documents 1 to 3 all employ rare-earth elements such as gadolinium and samarium as neutron-absorbing elements. Therefore, from the viewpoint of effectively utilizing limited natural resources, it is desirable to provide a material that can exhibit excellent neutron-shielding performance while suppressing the consumption of such rare-earth elements.

Accordingly, the inventor of the present invention has studied the creation of a neutron-shielding structure capable of maximizing neutron-shielding performance while minimizing the amount of neutron-absorbing elements used.

### Means for Solving the Problems

As a result, the inventor has found that in a composite material in which a matrix such as a resin is filled with a material containing neutron-absorbing elements, the neutron-shielding performance is superior when the material containing the neutron-absorbing elements is filled in the form of a fiber bundle rather than in a particulate form. Based on this finding, the present invention has been completed.

That is, the present invention provides a multilayer structure having neutron-shielding properties, wherein the multilayer structure comprises:
at least one first layer made of a resin or an elastomer, and
at least one second layer formed of neutron-shielding inorganic fiber bundles and a resin or an elastomer,
laminated alternately in a stacked manner.

In the multilayer structure of the present invention, the first layer serves to attenuate the energy of neutrons (i.e., to slow down the velocity of neutrons), and the second layer serves to absorb the decelerated neutrons.

### Effects of the Invention

In the multilayer structure of the present invention, since the material containing neutron-absorbing elements is incorporated not as a powder but as inorganic fiber bundles, the neutron-shielding performance is significantly improved.

Furthermore, because the filler is composed of inorganic fiber bundles, it is possible to effectively position and form the neutron-slowing layer and the neutron-absorbing layer within the structure.

### Brief Description of Drawings

[Fig. 1] Schematic diagram showing the layer structure of the multilayer structure of the present invention.
[Fig. 2] Schematic diagram showing a conventional neutron-shielding structure in which the material containing neutron-absorbing elements is in powder form.
[Fig. 3] Graph showing the results of PHITS calculations.
[Fig. 4] Enlarged view of a part of the graph shown in Fig. 3.
[Fig. 5] Schematic diagrams of two examples of multilayer structure models used in PHITS calculations.
[Fig. 6] Another graph showing the results of PHITS calculations.
[Fig. 7] Diagram showing a preferred embodiment of the multilayer structure of the present invention.
[Fig. 8] Diagram showing another preferred embodiment of the multilayer structure of the present invention.
[Fig. 9] Diagram showing a further preferred embodiment of the multilayer structure of the present invention.
**[****Fig. 10****]** Diagram showing yet another preferred embodiment of the multilayer structure of the present invention.

### Mode for Carrying Out the Invention

The multilayer structure of the present invention will now be described in detail with reference to the drawings, as appropriate.

In the present invention, instead of using the conventionally adopted neutron-absorbing inorganic powder, neutron-absorbing inorganic fibers are employed as the neutron-absorbing component. The inorganic fibers can be formed into various types of fiber bundles by bundling the fibers, and by combining them with a resin or elastomer, a composite material can be produced in which the fiber bundles are arranged in layers within the resin or elastomer matrix.

The multilayer structure of the present invention is constructed by making full use of the characteristics of such fiber bundles.

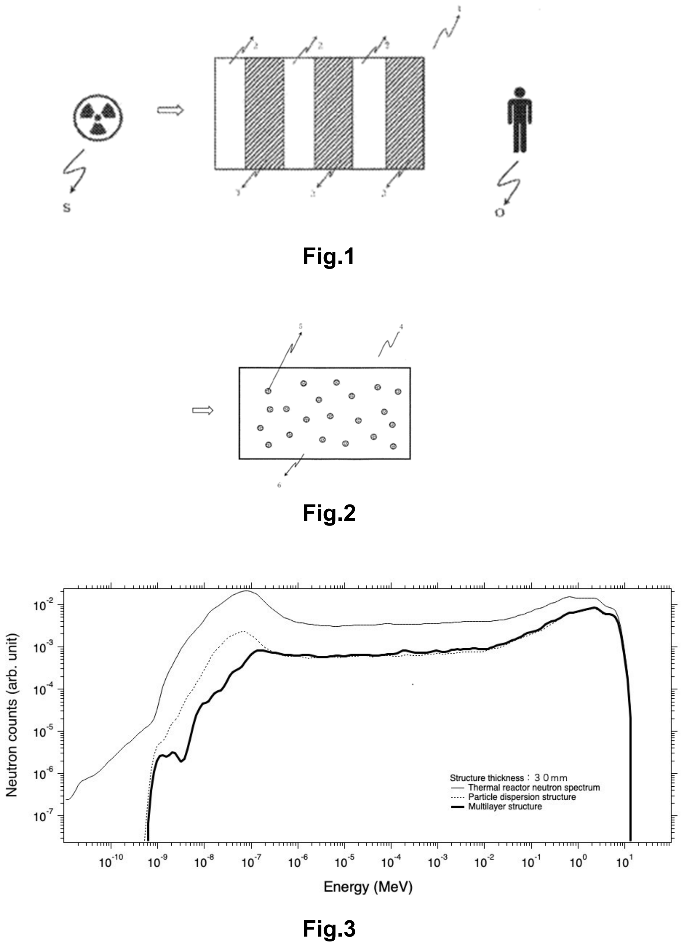

Fig. 1 shows a basic embodiment of the present invention.

In the figure, the multilayer structure (1) is disposed between to prevent the object from being irradiated with neutrons.

The multilayer structure (1) comprises two types of layers laminated together, namely a first layer (2) and a second layer (3). Each of the first layer (2) and the second layer (3) may consist of one or more layers in the overall structure. By combining two or more layers of each type, the proportion of neutron-shielding inorganic fiber bundles within the multilayer structure (1) in the direction from the neutron source (S) toward the object to be protected (O).

The first layer (2) is composed of a resin or elastomer, while the second layer (3) is composed of neutron-shielding inorganic fiber bundles and a resin or elastomer.

The resin or elastomer constituting the first layer (2) and that constituting the second layer (3) need not be identical; however, it is preferable that they are the same, since using identical materials for both layers simplifies the manufacturing process of the final multilayer product (1).

As a common component of the first layer (2) and the second layer (3), a resin or elastomer is employed.

In some cases, the resin or elastomer used for forming the second layer (3) may be referred to as a matrix.

The resins or elastomers used in the present invention will be described below.

Both thermosetting and thermoplastic types of resins (or elastomers) can be used, depending on the molding method of the multilayer structure (1). From the viewpoint of heat resistance and strength, thermosetting types are preferred; however, thermoplastic types can also be adopted for improved productivity.

Resins and elastomers containing a high amount of hydrogen atoms in their molecular skeletons are more preferable because they enhance the neutron-slowing capability.

### Mode for Carrying Out the Invention (continued)

When moderate flexibility is required for the multilayer structure (1), an elastomer may be used instead of the resin.

Examples of thermosetting resins include epoxy resin, unsaturated polyester resin, vinyl ester resin, bismaleimide resin, and phenolic resin, but are not limited thereto.

From the standpoint of neutron shielding, thermosetting resins containing a large amount of hydrogen in their molecular skeletons are preferred.

As such thermosetting resins, bisphenol-A type epoxy resins and hydrogenated bisphenol-A type epoxy resins can be exemplified.

These thermosetting resins are cured with a curing agent to form cured products, which constitute components of the first layer (2) and the second layer (3).

Examples of thermoplastic resins include polypropylene, polyethylene, polystyrene, ABS resin, polyphenylene ether, polycarbonate, and polyamide, but are not limited thereto.

Among these, polypropylene and polyethylene are more preferred not only because of their low cost but also because they contain a large amount of hydrogen in their molecular skeletons, thereby exhibiting a greater neutron-slowing effect.

Both thermosetting and thermoplastic elastomers can be used as the elastomer in the present invention.

Examples of thermosetting elastomers (including their cured products) include ethylene-propylene rubber (EPDM), nitrile rubber (NBR), acrylic rubber (ACM), urethane rubber (PUR), silicone rubber, ethylene-vinyl acetate rubber (EVA), and epichlorohydrin rubber (ECO).

All of these exhibit excellent weather resistance; among them, EPDM and silicone rubber are particularly preferred because they contain a large amount of hydrogen in their molecular skeletons.

Examples of thermoplastic elastomers include styrene-based thermoplastic rubbers, polyolefin-based thermoplastic rubbers, polyurethane-based thermoplastic rubbers, polyester-based thermoplastic rubbers, polyamide-based thermoplastic rubbers, and polyvinyl chloride-based thermoplastic rubbers.

As examples of styrene-based thermoplastic rubbers, mention may be made of styrene-ethylene-butylene-styrene block copolymer (SEBS) and styrene-ethylene-propylene-styrene block copolymer (SEPS).

Among the above thermoplastic elastomers, EPDM, polyolefin-based thermoplastic rubbers, SEBS, and SEPS are preferred because they exhibit excellent weather resistance and contain a large amount of hydrogen in their molecular skeletons.

The second layer (3) constituting the multilayer structure (1) of the present invention is composed of the resin or elastomer described above and inorganic fiber bundles.

The term inorganic fiber bundle used in the present invention refers to secondary products of inorganic fibers, such as fiber cloths, rovings, roving cloths, chopped strand mats, nonwoven fabrics, filament mats, and other similar materials.

Any of these forms can be suitably selected according to the molding method to be employed.

The inorganic fibers serving as the basis of the inorganic fiber bundles are rich in neutron-absorbing properties and contain, in a high proportion, at least one element selected from gadolinium, samarium, and cadmium.

More specifically, the inorganic fibers preferably contain 10 mass% or more, more preferably 20 mass% or more, still more preferably 30 mass% or more, and most preferably 40 mass% or more of one or more of the elements selected from gadolinium, samarium, and cadmium, expressed in terms of their oxides.

Although two or more of these three elements may be contained together, gadolinium exhibits the highest neutron-absorbing capacity.

Accordingly, to enhance the neutron-absorbing performance per unit mass of inorganic fiber, it is preferable that the inorganic fiber contain 10 mass% or more, more preferably 20 mass% or more, still more preferably 30 mass% or more, and most preferably 40 mass% or more of gadolinium, in terms of gadolinium oxide.

In manufacturing the inorganic fibers, the above three elements may be used either in the elemental (metallic) form or in the form of oxides as the raw materials.

In addition to the above three essential elements, the inorganic fibers may further contain, as major components, known oxides excellent in glass-forming ability, namely silicon oxide and aluminum oxide, and may also contain calcium oxide as an auxiliary component.

The second layer (3) consists of inorganic fiber bundles and a resin (or elastomer).

More specifically, the voids within the inorganic fiber bundles are filled with the same matrix material (resin or elastomer) as that forming the first layer (2) described above.

The ratio of the mass of the inorganic fiber bundles to the total mass of the second layer (3) is preferably 10 to 95 mass%.

From the viewpoint of improving neutron absorption efficiency, the ratio is more preferably 25 mass% or more, further preferably 50 mass% or more, and still more preferably 70 mass% or more.

The mass ratio of the inorganic fiber bundles within the total mass of the second layer (3) largely depends on the volume porosity (void fraction) of the inorganic fiber bundles.

However, it can also be adjusted by the specific molding method used for combining the inorganic fiber bundles with the matrix resin (or elastomer).

Accordingly, to increase the mass ratio of the inorganic fiber bundles in the second layer (3), a fiber bundle having a smaller volume porosity may be used, and if necessary, the molding pressure during combination with the matrix material may be increased.

When forming the second layer (3), if the matrix is a thermosetting resin or thermosetting elastomer, the prepolymer thereof is impregnated into the inorganic fiber bundles, followed by pressurization and heating to obtain the desired composite.

Specific molding methods suitably adopted include autoclave molding, infusion molding, and hand lay-up molding, which are known techniques.

On the other hand, when the matrix is a thermoplastic resin or thermoplastic elastomer, a sheet made of such material is first prepared, superposed with a fiber cloth, and then subjected to heating and pressure molding, such as calendar molding, to produce the composite.

Since the resin or elastomer used for forming the first layer (2) and the second layer (3) may be identical, the first layer (2) and the second layer (3) can be fabricated separately and then laminated together to form the desired multilayer structure. However, when the matrix is of a thermosetting type, the following molding method can be employed to simplify the process.

Specifically, a plurality of inorganic fiber bundles (for example, fiber cloths) is first stacked in multiple layers, impregnated with the matrix prepolymer, and then subjected to pressurization, heating, and curing under controlled time conditions.

In this manner, the first layer (2) consisting only of the matrix and the second layer (3) consisting of inorganic fiber bundles impregnated with the matrix can be formed in a single step between adjacent fiber bundles.

There is no particular limitation on the ratio between the total thickness of the first layers (2) and that of the second layers (3) in the multilayer structure (1).

Preferably, the ratio of the total thickness of the first layers (2) to that of the second layers (3) is in the range of 10/90 to 90/10.

The multilayer structure (1) of the present invention comprises at least one or more of the first layers (2) and at least one or more of the second layers (3) laminated alternately.

In a multilayer structure composed of one first layer (2) and one second layer (3), the first layer (2) is naturally disposed on the neutron-source side, and the second layer (3) on the protected-object side.

However, according to the results of simulations conducted by the inventor using a Monte Carlo particle transport code, when both the first and second layers are present in plural numbers in the multilayer structure (1), it was surprisingly found that if the outermost layer on the protected-object side is the first layer (2), the neutron-shielding performance deteriorates.

Therefore, it is preferable that the layer closest to the protected object be the second layer (3).

This finding indicates that even a thin first layer (i.e., a neutron-slowing layer) located at the outermost position on the protected-object side can impair the overall neutron-shielding performance of the multilayer structure (1).

Hence, the multilayer structure is preferably configured such that the outermost layer on the protected-object side is the second layer (3).

The results of the above simulations are described below.

Among several known Monte Carlo particle transport codes, the inventor used PHITS (Particle and Heavy Ion Transport code System).

PHITS is available from the website of the Japan Atomic Energy Agency (https://phits.jaea.go.jp/indexj.html), where its usage methods are also disclosed.

Figure 3 shows the result obtained by calculating, using the above code, the energy spectrum of transmitted neutrons when a neutron beam with a predetermined energy spectrum was irradiated onto the multilayer structure (1).

The energy spectrum of the incident neutrons used for the simulation was that of a thermal reactor neutron spectrum.

The total thickness of the multilayer structure (1) was set to 30 mm, with the first layer (2) assumed to be a cured product of bisphenol-A epoxy resin, and the second layer (3) assumed to be a fiber cloth containing gadolinium.

For convenience of calculation, the second layer (3) was assumed to consist solely of the inorganic fiber cloth, having a volume porosity of 0.5.

The assumptions for the multilayer model used in the calculation were as follows:
- Ratio of total thickness of first layers (2) to total thickness of second layers (3): 90/10
- Composition of first layer (2): bisphenol A / curing agent = 80/20 (mass ratio)
- Composition of second layer (3) (inorganic fiber cloth):
   Gd₂O₃ 10 mass%, SiO₂ 48 mass%, Al₂O₃ 15 mass%, Fe₂O₃ 9 mass%, CaO 10 mass%, B₂O₃ 5 mass%, K₂O 2 mass%
- Number of first layers (2): 20 (each of equal thickness)
- Number of second layers (3): 19 (each of equal thickness)

For comparison, a particle-dispersion structure (see Fig. 2) was also analyzed, in which the same resin as used in the first layer of the above multilayer model was used as the matrix, and the same amount of gadolinium oxide as contained in the second layers was dispersed as particles. The particle diameter was assumed to be 0.50 mm.

The calculation results are shown in Figure 3.

It is apparent from Figure 3 that in the neutron energy region below 10⁻⁷ MeV, the multilayer structure of the present invention exhibits a markedly superior neutron-shielding performance compared with the conventional particle-dispersion structure.

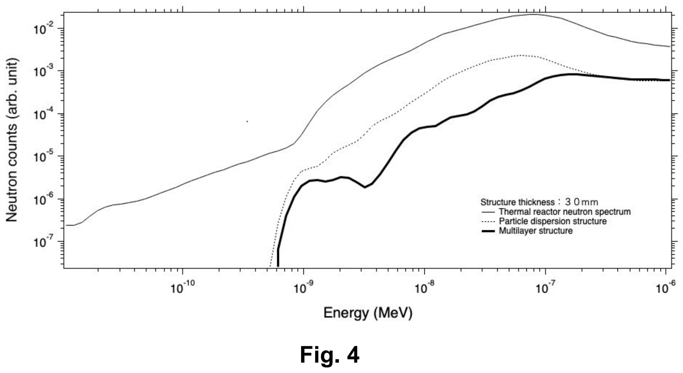

Figure 4 shows an enlarged view of the portion of Figure 3 corresponding to the energy region below 10⁻⁷ MeV.

These results clearly suggest the superiority of distributing neutron-absorbing elements locally in layers within the resin matrix, rather than uniformly dispersing them as particles.

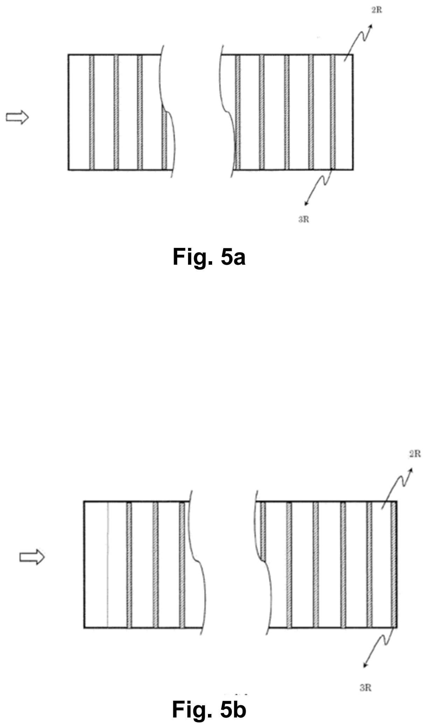

In the above simulation, the configuration in which the outermost layer on the protected-object side was a first layer (2R) (see Fig. 5(a)) was compared with a model in which that first layer was relocated to the neutron-source side (see Fig. 5(b)).

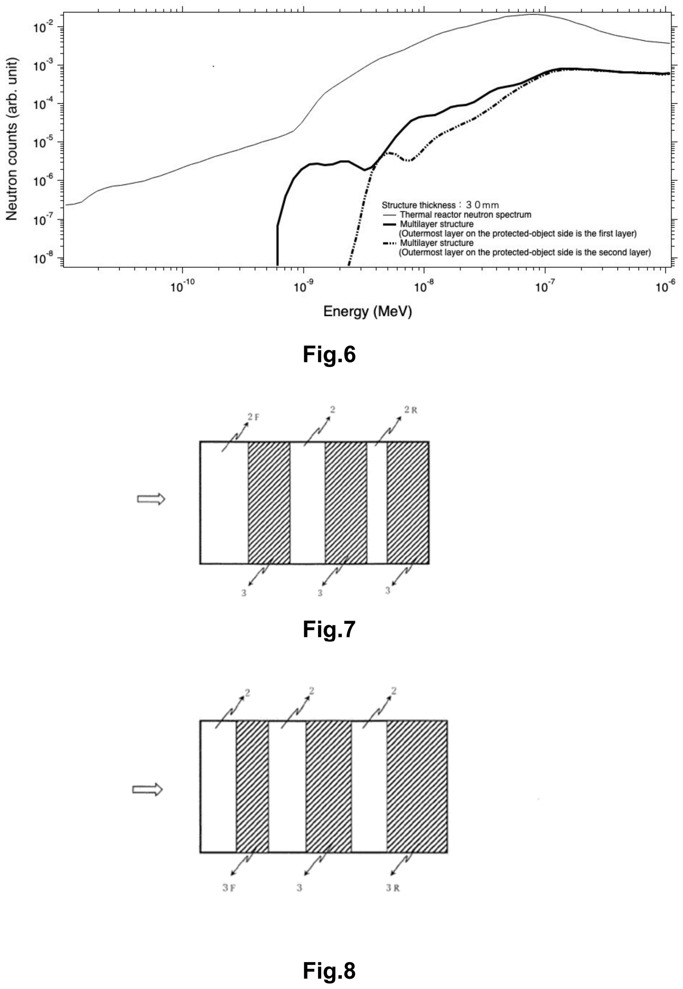

Unexpectedly, the latter configuration exhibited further improved neutron-shielding performance, as shown in Figure 6.

Similar results were also confirmed in a simplified model.

That is, for a two-layer structure consisting of one first layer (2) (on the neutron-source side) and one second layer (3) (on the protected-object side), the addition of another first layer having the same thickness behind the second layer (on the protected-object side) resulted in deterioration of neutron-shielding performance.

Accordingly, in the multilayer structure (1) of the present invention, it is preferable that the outermost layer on the protected-object side be the second layer (3), i.e., the neutron-absorbing layer.

In the molding of fiber-reinforced plastics (FRP) composites in which fiber bundles are combined with thermosetting resins, the surface of the molded product is often covered, to some extent, by a resin-rich layer composed only of the matrix.

Therefore, when fabricating the multilayer structure (1) of the present invention, attention should be paid to minimizing or eliminating such a resin-only layer on the outermost surface adjacent to the protected object, based on the above simulation results.

From this standpoint, when a thermosetting resin or thermosetting elastomer is used as the matrix, infusion molding or filament winding molding is particularly preferred among various thermosetting molding methods.

In particular, infusion molding is advantageous because it involves placing fiber cloths or nonwoven fiber bundles between an upper film and a lower mold, maintaining airtightness of the film, and then drawing the resin under vacuum to impregnate the fibers.

As a result, resin (or elastomer) bleed-out onto the surface of the molded article is minimized, and the method is also suitable for molded articles having irregular surfaces.

When the multilayer structure (1) of the present invention comprises two or more first layers (2), the configuration may be such that the thickness of each first layer (2) gradually increases from the layer closest to the protected object (2R) toward the layer closest to the neutron source (2F), as illustrated in Figure 7.

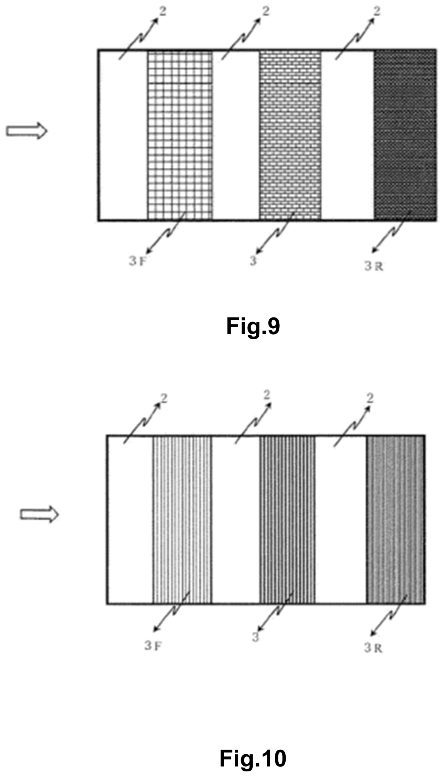

When the multilayer structure (1) comprises two or more second layers (3), the following variations may be adopted for these second layers (3):
That is, from the layer closest to the neutron source (3F) toward the layer closest to the protected object (3R),
i) the thickness of each layer may gradually increase (pattern of increasing layer thickness) - see Figure 8;
ii) the content of inorganic fiber bundles per unit volume of each layer may gradually increase (or equivalently, the volume porosity of the inorganic fiber bundles may decrease) - see Figure 9; and/or
iii) the content of neutron-absorbing elements (gadolinium, samarium, or cadmium) contained in the inorganic fiber bundles constituting each layer may gradually increase (pattern of increasing neutron-absorbing element concentration) - see Figure 10.

The above variations may be combined in any suitable manner - for example:
a combination of variations (i) and (ii);
a combination of (ii) and (iii);
a combination of (i) and (iii); or
a combination of all (i), (ii), and (iii).

As a modification of the multilayer structure of the present invention, it is also possible to provide a multilayer structure consisting essentially of two or more layers each formed of inorganic fiber bundles and a resin (or elastomer), without clearly defining separate first layers.

In such a case, the multilayer structure comprises at least two layers, each consisting of a resin (or elastomer) and inorganic fiber bundles, wherein, from the layer closest to the neutron source toward the layer closest to the protected object:
a) the content of inorganic fiber bundles per unit volume gradually increases; or
b) the content of neutron-absorbing elements (gadolinium, samarium, or cadmium) contained in the inorganic fiber bundles constituting each layer gradually increases.

The multilayer structures having the above configurations can also be suitably produced using known molding methods such as autoclave molding, infusion molding, or hand lay-up molding.

### Industrial Applicability

The multilayer structure of the present invention exhibits excellent neutron-shielding performance.

Because it is composed of inorganic fiber bundles filled in a resin or elastomer matrix, the structure offers a higher degree of design flexibility compared with concrete-based materials.

Accordingly, it is suitable for use in various nuclear, aerospace, and medical fields as equipment, apparatus, or structural components.

Examples in the nuclear field include:
- Facilities, devices, and components for nuclear power generation;
- Facilities, devices, and components for preventing critical reactions during the removal and storage of debris (molten nuclear fuel);
- Facilities, devices, and components for mining and processing uranium ores;
- Facilities, devices, and components for secondary processing of nuclear fuel, including conversion, enrichment, reconversion, shaping, and MOX fabrication;
- Facilities, devices, and components for storage, processing, and reprocessing of spent nuclear fuel;
- Facilities, devices, and components for storage, processing, and disposal of neutron-irradiated waste;
- Equipment and components for transporting uranium ores, secondary processed nuclear fuels, spent nuclear fuels, or neutron-irradiated wastes; and
- Other nuclear-related facilities, devices, and components.

More specific examples of equipment and components for nuclear power generation include reactor buildings (including research and test reactors), reactor containment vessels, piping systems within reactor facilities, and decommissioning robots.

Examples in the aerospace field include space bases, space stations, artificial satellites, and planetary exploration satellites.

An example in the medical field is medical equipment utilizing particle beams.

The above applications are illustrative examples intended to demonstrate the utility of the composite material of the present invention and are not intended to limit the scope of the invention.

### Description of Reference Numerals

- 1: Multilayer structure
- 2: First layer
- 2F: First layer closest to neutron source
- 2R: First layer closest to protected object
- 3: Second layer
- 3F: Second layer closest to neutron source
- 3R: Second layer closest to protected object
- 4: Conventional neutron-shielding structure
- 5: Dispersed particles
- 6: Resin
- S: Neutron source
- O: Protected object

## Claims

1. A multilayer structure having neutron-shielding properties, which is disposed between a neutron source and an object to be protected,
wherein the multilayer structure comprises:
at least one first layer made of a resin or an elastomer, and
at least one second layer formed of neutron-absorbing inorganic fiber bundles and the resin or elastomer,
the first and second layers being laminated alternately.

2. The multilayer structure according to Claim 1,
wherein the total mass of one or more elements selected from gadolinium, samarium, and cadmium contained in the inorganic fiber bundles is 10 mass% or more.

3. The multilayer structure according to Claim 2,
wherein the inorganic fiber bundles are selected from fiber cloths, rovings, roving cloths, chopped strand mats, milled fibers, nonwoven fabrics, or filament mats.

4. The multilayer structure according to Claim 3,
wherein the resin or elastomer constituting the first layer and the resin or elastomer constituting the second layer are identical.

5. The multilayer structure according to Claim 4,
wherein the outermost layer closest to the object to be protected is the second layer.

6. The multilayer structure according to Claim 4,
wherein the outermost layer closest to the neutron source is the first layer.

7. The multilayer structure according to Claim 5 or Claim 6,
wherein both the first layer and the second layer are provided in plural numbers.

8. The multilayer structure according to Claim 7,
wherein the thickness of each first layer gradually increases from the layer closest to the object to be protected toward the layer closest to the neutron source.

9. The multilayer structure according to Claim 7,
wherein the thickness of each second layer gradually increases from the layer closest to the neutron source toward the layer closest to the object to be protected.

10. The multilayer structure according to Claim 7,
wherein, for the plurality of second layers, from the layer closest to the neutron source toward the layer closest to the object to be protected,
i) the content of inorganic fiber bundles per unit volume increases, or
ii) the volume porosity of the inorganic fiber bundles decreases, or
iii) the content of neutron-absorbing elements (gadolinium, samarium, or cadmium) contained in the inorganic fiber bundles increases.

11. A multilayer structure having neutron-shielding properties, which is disposed between a neutron source and an object to be protected,
wherein the multilayer structure comprises two or more layers each formed of neutron-absorbing inorganic fiber bundles and a resin or elastomer,
and wherein, from the layer closest to the neutron source toward the layer closest to the object to be protected,
i) the content of inorganic fiber bundles per unit volume increases, or
ii) the volume porosity of the inorganic fiber bundles decreases, or
iii) the content of neutron-absorbing elements (gadolinium, samarium, or cadmium) contained in the inorganic fiber bundles increases.

12. The multilayer structure according to Claim 10,
wherein the resin is a cured product of bisphenol-A type epoxy resin or hydrogenated bisphenol-A type epoxy resin.

13. The multilayer structure according to Claim 11,
wherein the resin is a cured product of bisphenol-A type epoxy resin or hydrogenated bisphenol-A type epoxy resin.

14. A method for producing the multilayer structure according to Claim 10,
wherein the multilayer structure is manufactured by an infusion molding process.

15. A method for producing the multilayer structure according to Claim 11,
wherein the multilayer structure is manufactured by an infusion molding process.
